# EUROPÄISCHE PATENTANMELDUNG

(11) **EP 1 251 676 A1**
(43) Veröffentlichungstag der Anmeldung: **23.10.2002**
(21) Anmeldenummer: 02100321.5
(22) Anmeldetag: 02.04.2002
(51) Int. Cl.: H04M 1/22

(54) **Kommunikations-Endgerät mit verschiedenen Farben für Rücklicht- und Tasten- Beleuchtung gesteuert von übermittelten Informationen**

(30) Priorität: 19.04.2001 DE 10119230
(71) Anmelder: SIEMENS AKTIENGESELLSCHAFT, 80333 München (DE)
(72) Erfinder: Eggenstein, Thomas, 89275 Elchingen (DE)

(57) **Zusammenfassung**

Die Erfindung betrifft ein Kommunikations-Endgerät, insbesondere Mobilfunk-Endgerät (10a, 10b) umfassend:
- Informationseingabemittel (16a, 16b, 26a, 26b, 28a, 28b) zum Eingaben von Informationen,
- eine Sende-/Empfangseinheit zum Senden und Empfangen von Informationen und
- eine visuelle Anzeigeeinheit (18a, 18b), insbesondere ein Display, zum visuellen Ausgeben von Informationen.

Bei diesem Kommunikationsgerät ist vorgesehen, dass die visuelle Anzeigeeinheit (18a, 18b) oder/und die Informationseingabemittel (16a, 16b) jeweils in wenigstens zwei unterschiedlichen Betriebsmodi betreibbar sind, wobei jedem Betriebsmodus ein vorbestimmter Informationsgehalt zuordenbar oder zugeordnet ist.

## Beschreibung

Die vorliegende Erfindung betrifft ein Kommunikations-Endgerät, insbesondere ein Mobilfunk-Endgerät, umfassend Informationseingabemittel zum Eingeben von Informationen, eine Sende-/Empfangseinheit zum Senden und Empfangen von Informationen und eine visuelle Anzeigeeinheit, insbesondere ein Display, zum visuellen Ausgeben von Informationen.

Ein derartiges Kommunikations-Endgerät ist aus dem Stand der Technik beispielsweise als herkömmliches Mobilfunk-Telefon bekannt. Mit einem Mobilfunk-Telefon ist es möglich, akustische Informationen, beispielsweise Sprachinformationen, sowie visuelle Informationen, beispielsweise in Form von Kurznachrichten (SMS, Short Message Service), an einen Kommunikationspartner zu übermitteln. Obgleich mittels dieser Möglichkeiten eine weitere Übertragung von Informationen mit bestimmtem Informationsgehalt möglich ist, wurden in der Vergangenheit weitere Möglichkeiten gesucht, Informationen auf anderem Wege als durch Sprachmitteilung oder Textmitteilung zu übermitteln. So ist es beispielsweise möglich, bestimmten Anrufern unterschiedliche Klingeltöne zuzuordnen, so dass der Benutzer eines Mobiltelefons bereits an dem Klingelton erkennt, welcher Gesprächsteilnehmer gerade anruft. Hierzu muss jedoch der Benutzer des Mobiltelefons einerseits vorab eine Auswahl bestimmter Gesprächsteilnehmer getroffen und diesen bestimmte Klingeltöne zugeordnet haben. Darüber hinaus muss der Benutzer die Klingeltöne aktiviert haben, was in einer ruhigen, diskreten Umgebung oftmals unerwünscht ist.

Es ist Aufgabe der vorliegenden Erfindung, ein Kommunikations-Endgerät der eingangs bezeichneten Art bereitzustellen, mit welchem eine über die vorstehend angesprochenen Übertragungsmöglichkeiten hinausgehende Möglichkeit zur Informationsübermittlung möglich ist.

Diese Aufgabe wird durch ein Kommunikations-Endgerät, insbesondere ein Mobilfunk-Endgerät gelöst, welches umfasst:
- Informationseingabemittel zum Eingeben von Informationen,
- eine Sende/Empfangseinheit zum Senden und Empfangen von Informationen und
- eine visuelle Anzeigeeinheit, insbesondere ein Display, zum visuellen Ausgeben von Informationen,
wobei die visuelle Anzeigeeinheit oder/und die Informationseingabemittel jeweils in wenigstens zwei unterschiedlichen Betriebsmodi betreibbar sind, wobei jedem Betriebsmodus ein vorbestimmter Informationsgehalt zuordenbar oder zugeordnet ist.

Erfindungsgemäß können die visuelle Anzeigeeinheit o-der/und die Informationseingabemittel also in Abhängigkeit von einem vorbestimmten Informationsgehalt eine Information, welche über die Sende/Empfangseinheit empfangen wurde, unterschiedlich betrieben werden, so dass der Benutzer des Kommunikations-Endgerätes visuell Informationen übermittelt bekommt. Dies ist in einer Weiterbildung der Erfindung beispielsweise dadurch möglich, dass die visuelle Anzeigeeinheit oder/und die Informationseingabemittel beleuchtbar sind, wobei die unterschiedlichen Betriebsmodi auf einer Variation der Beleuchtung der visuellen Anzeigeeinheit oder/und der Informationseingabemittel beruhen. Dies kann in einer Ausführungsform der Erfindung beispielsweise dadurch erfolgen, dass die visuelle Anzeigeeinheit oder/und die Informationseingabemittel mit Licht in wenigstens zwei verschiedenen Farben beleuchtbar sind. Es ist also möglich, je nach Informationsgehalt, die visuelle Anzeigeeinheit oder/und die Informationseingabemittel unterschiedlich zu beleuchten, beispielsweise derart, dass bei einem eingehenden persönlichen Anruf die visuelle Anzeigeeinheit oder/und die Informationseingabemittel mit Licht eines "warmen" Farbtons beleuchtet werden, beispielsweise rot oder orange, jedoch bei Eingang eines geschäftlichen Anrufes mit Licht eines "kalten" oder neutralen Farbtons beleuchtet werden, beispielsweise mit blau oder weißem Licht. Gleichermaßen ist es möglich, die unterschiedliche Beleuchtbarkeit der visuellen Anzeigeeinheit oder/und Informationseingabemittel im Rahmen der Informationsübermittlung durch einen Kurznachrichtendienst, wie den im GSM-Standard vorgesehenen SMS-Dienst (Short Message Service) zu nutzen, beispielsweise derart, dass der Absender die von ihm verschickte Kurznachricht als ganzes oder lediglich Teile der Kurznachricht mit unterschiedlichen Farbtönen hinterlegt, bei dem Empfänger der Kurznachricht zur Anzeige bringt und somit die Möglichkeit hat, zusätzlich zu dem Inhalt seiner Kurznachricht durch die gewählten Farbtöne Informationen übermittelt, beispielsweise Informationen über seinen Gemütszustand oder dergleichen.

Zusätzlich oder alternativ zu einer Beleuchtung der visuellen Anzeigeeinheit oder/und der Informationseingabemittel mit wenigstens zwei verschiedenen Farben kann erfindungsgemäß vorgesehen sein, dass die visuelle Anzeigeeinheit oder/und die Informationseingabemittel mit wenigstens zwei verschiedenen Beleuchtungsintensitäten beleuchtbar sind. Auch die Auswahl von verschiedenen Beleuchtungsintensitäten kann zur Übermittlung bestimmter Informationen dienen, wie beispielswiese emotionaler Zustände des Absenders.

Es kann alternativ oder zusätzlich zu den vorstehend genannten Möglichkeiten der unterschiedlichen Beleuchtung der visuellen Anzeigeeinheit oder/und der Informationseingabemittel erfindungsgemäß vorgesehen sein, dass die visuelle Anzeigeeinheit oder/und die Informationseingabe alternierend, vorzugsweise regelmäßig alternierend, in unterschiedlichen Betriebsmodi betreibbar sind. So können beispielsweise die visuelle Anzeigeeinheit oder/und die Informationseingabemittel wechselweise in unterschiedlichen Farbtönen beleuchtet werden, um somit einen "Blink-Effekt" zu erreichen. Dadurch wird beispielsweise bei dem Empfänger eines Anrufs oder einer Kurznachricht besondere Aufmerksamkeit erweckt, was beispielsweise in einer Notrufsituation von Vorteil sein kann.

Hinsichtlich der Informationseingabemittel kann vorgesehen sein, dass diese eine Tastatur umfassen zum Eingeben von bestimmten Informationen, wie dies bei herkömmlichen Mobiltelefonen der Fall ist.

Ferner kann in einer Weiterbildung der Erfindung vorgesehen sein, dass die Informationseingabemittel einen Temperatursensor umfassen zur Erfassung der Aussentemperatur des Kommunikations-Endgeräts. Wenn in diesem Zusammenhang von der Aussentemperatur die Rede ist, so ist damit auch gemeint, dass mittels des Temperatursensors die Körpertemperatur eines das Kommunikations-Endgerät in der Hand haltenden Benutzers erfasst wird, beispielsweise dadurch, dass der Benutzer einen Finger auf den Temperatursensor auflegt und dadurch Information in das erfindungsgemäße Kommunikations-Endgerät einspeist.

Ferner kann erfindungsgemäß vorgesehen sein, dass die Informationseingabemittel einen Widerstandssensor umfassen zur Erfassung des Hautwiderstandes einer das Kommunikations-Endgerät haltenden Hand des Benutzers. Auch bei dieser Ausgestaltung der Erfindung kann also Information, welche den Betriebsmodus eines empfangenden Kommunikations-Endgerätes bestimmt, durch Auflegen beispielsweise eines Fingers auf den Widerstandssensor und Erfassen des Hautwiderstandes eingegeben werden.

Die Erfindung betrifft ferner ein Verfahren zum Übermitteln und Anzeigen von Informationen mittels eines ersten Kommunikations-Endgerätes zu einem zweiten Kommunikations-Endgerät nach einem der vorangehenden Ansprüche, wobei über die Informationseingabemittel des ersten Kommunikations-Endgerät Informationen eingegeben werden, welche nach Übertragung zu dem zweiten Kommunikations-Endgerät den Betriebsmodus der visuellen Anzeigeeinheit oder/und der Informationseingabemittel des zweiten Kommunikations-Endgerätes bestimmen.

Wie vorstehend hinsichtlich der Kommunikations-Endgeräte bereits erläutert, kann bei dem erfindungsgemäßen Verfahren vorgesehen sein, dass die visuelle Anzeigeeinheit o-der/und die Informationseingabemittel nach Maßgabe des Informationsgehaltes der übertragenen Informationen in Intensität oder/und Farbe - dauerhaft oder alternierend - unterschiedlich beleuchtet werden.

Ferner kann bei dem erfindungsgemäßen Verfahren vorgesehen sein, dass die Informationseingabemittel eine Tastatur umfassen zur Eingabe von Informationen, wobei der Informationsgehalt der eingegebenen Informationen den Betriebsmodus der visuellen Anzeigeeinheit oder/und der Informationseingabemittel des zweiten Kommunikations-Endgerätes bestimmen.

Darüber hinaus kann für das erfindungsgemäße Verfahren vorgesehen sein, dass die Informationseingabemittel einen Temperatursensor umfassen zur Erfassung der Aussentemperatur, wobei der Informationsgehalt der zwischen erstem und zweitem Kommunikations-Endgerät übertragenen Informationen nach Maßgabe der erfassten Temperatur bestimmt wird.

Schließlich kann für das erfindungsgemäße Verfahren weiter vorgesehen sein, dass die Informationseingabemittel einen Widerstandssensor umfassen zur Erfassung des Hautwiderstandes einer das erste Kommunikations-Endgerät haltenden Hand eines Benutzers, wobei der Informationsgehalt der zwischen dem ersten und dem zweiten Kommunikations-Endgerät übertragenen Informationen nach Maßgabe des erfassten Hautwiderstandes bestimmt wird.

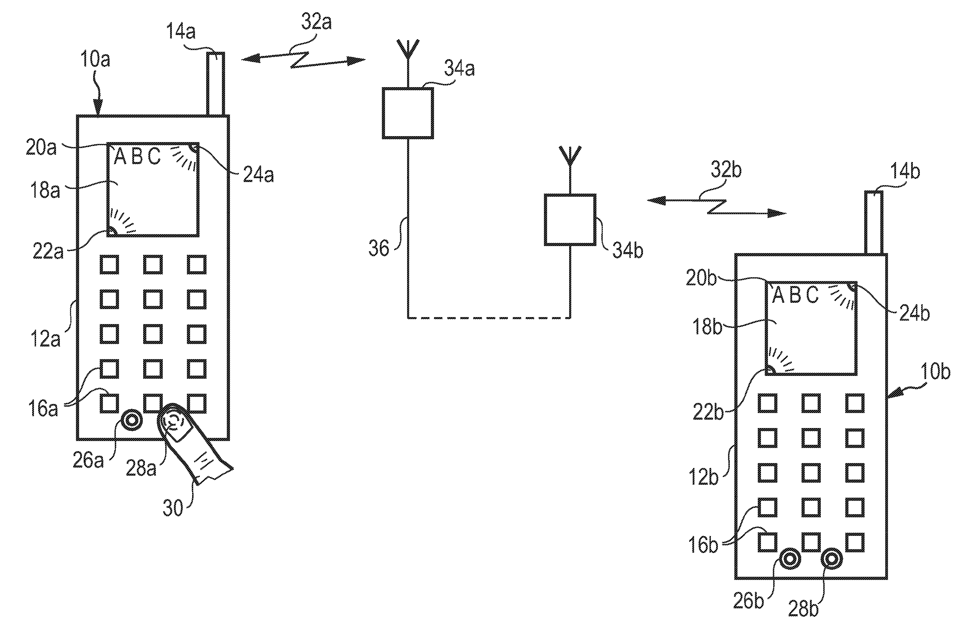

Die Erfindung wird im folgenden erläutert anhand der beiliegenden
- Figur 1,: in welcher schematisch ein erstes und ein zweites erfindungsgemäßes Kommunikations-Endgerät gezeigt ist, welche nach dem erfindungsgemäßen Verfahren miteinander Informationen austauschen.

In Figur 1 ist ein erstes erfindungsgemäßes Kommunikations-Endgerät als Mobiltelefon 10a und ein zweites erfindungsgemäßes Kommunikations-Endgerät als Mobiltelefon 10b dargestellt. Die erfindungsgemäßen Mobiltelefone 10a und 10b umfassen jeweils ein Gehäuse 12a, 12b und eine Antenne 14a, 14b. Ferner ist jedes der erfindungsgemäßen Mobiltelefone 10a und 10b jeweils mit einer Tastatur 16a versehen. An jedem der erfindungsgemäßen Mobiltelefone 10a und 10b ist darüber hinaus ein Display 18a, 18b vorgesehen, in welchem wie bei 20a, 20b angedeutete Informationen dargestellt werden können. Jedes der Displays 18a, 18b ist über eine gesonderte erste Beleuchtung 22a, 22b und eine weitere gesonderte Beleuchtung 24a, 24b beleuchtbar. Die Beleuchtungen 22a, 22b und 24a, 24b haben unterschiedliche Farben, beispielsweise derart, dass die Beleuchtungen 22a, 22b das Display 18a, 18b jeweils mit Licht eines Rottons beleuchten, wohingegen die Beleuchtungen 24a, 24b das Display 18a, 18b jeweils mit Licht eines Blautons beleuchten. Die Beleuchtungen 22a, 22b und 24a, 24b sind separat ansteuerbar, derart, dass sie wahlweise oder gemeinsam leuchten können.

Ferner umfassen die erfindungsgemäßen Mobiltelefone 10a und 10b auf der an dem Display 18a, 18b abgewandten Seite der Tastatur 16a, 16b jeweils einen Temperatursensor 26a, 26b und einen Hautwiderstandssensor 28a, 28b. Auf den Hautwiderstandssensor 28a ist gerade, wie schematisch gezeigt, ein Daumen 30 eines Benutzers aufgelegt, um den Hautwiderstand des Daumens zu erfassen.

Die erfindungsgemäßen Mobiltelefone 10a und 10b kommunizieren wie folgt miteinander. Durch herkömmliche Eingabe von Kurznachrichten oder Sprachsignalen in die Mobiltelefone können über die Luftschnittstellen 32a, 32b Mobilfunksignale an zugeordnete Basisstationen 34a, 34b übertragen werden, welche dann in herkömmlicher Weise über die Verbindung 36 miteinander kommunizieren. Gibt der Benutzer beispielsweise eine Kurznachricht an dem Mobiltelefon 10a ein, so erscheint diese in Form von Symbolen 20a auf dem Display 18a. Möchte der Benutzer diese Kurznachricht an den Benutzer des Mobiltelefons 10b übermitteln, so gibt er dessen Rufkennung ein. Um der Kurznachricht zusätzlichen Informationsgehalt in Form von Farbinformation zu verleihen, welche dann an dem Mobiltelefon 10b nach Empfang der Kurznachricht zusätzlich zu dieser angezeigt wird, indem das Display 18b wahlweise durch eine der Beleuchtungen 22b, 24b entweder rötlich oder bläulich beleuchtet wird, gibt der Absender, d.h. der Benutzer des Mobiltelefons 10a, wahlweise über die Tastatur 16a einen Code für eine gewünschte Displaybeleuchtung des Mobiltelefon 10b ein oder er legt seinen Daumen 30 auf den Hautwiderstandssensor 28a auf. Nach Auflegen seines Daumens 30 auf den Hautwiderstandssensor 28a wird der Hautwiderstand des Daumens gemessen und nach Maßgabe des gemessenen Wertes des Hautwiderstandes, welcher beispielsweise ein Indikator für den gegenwärtigen Gemütszustand des Benutzers des Mobiltelefons 10a ist, wird nach Übertragung der Kurznachricht zu dem Mobiltelefon 10b über die Luftschnittstelle 32a, die Basisstation 34a, die Verbindung 36, die Basisstation 34b und die Luftschnittstelle 32b das Display 18b in vorbestimmter Weise beleuchtet, beispielsweise durch die Beleuchtung 22b mit Licht eines Rottons, so dass der Benutzer des Mobiltelefons 10b neben dem Inhalt der übermittelten Symbole 20b der Kurznachricht auch durch die Hintergrundbeleuchtung Information über den Gemütszustand des Absenders, d.h. des Benutzers des Mobiltelefons 10a bekommt.

Es sei darauf hingewiesen, dass die Beleuchtung des Displays 18b nicht allein durch Nutzung des Sensors 26a, 28a ansteuerbar ist, sondern dass diese auch durch einfache Eingabe eines Codes für eine Sollbeleuchtung über die Tastatur 16a veränderbar ist. Gleichermaßen ist darauf hinzuweisen, dass jeder Benutzer eines Mobiltelefons 10a, 10b auch die Beleuchtung seines Displays 18a ohne Fremdeinwirkung, d.h. ohne Empfang von die Displaybeleuchtung beeinflussenden Mobilfunksignalen eines Gesprächsteilnehmers, verändern kann und so das äußere Erscheinungsbild seines Mobiltelefons nach freiem Ermessen verändern kann.

Darüber hinaus sei darauf hingewiesen, dass - obgleich im vorstehend beschriebenen Ausführungsbeispiel lediglich die Beleuchtung der Displays 18a und 18b veränderbar gezeigt ist - gleichermaßen die Beleuchtung der Tastatur 16a bzw. 16b veränderbar gestaltet werden kann, beispielsweise in gleichem Maße, also synchron und monochrom zu der Displaybeleuchtung, oder auf andere Weise, so dass interessante ansprechende und Aufmerksamkeit erregende optische Effekte erzielt werden können.

Durch die Erfindung ist es möglich, neben den herkömmlichen Informationsübertragungskanälen zusätzlich auch noch das Farb- oder/und Beleuchtungsempfinden eines Benutzers anzusprechen und diesem somit zusätzliche Informationen oder Impressionen zu übermitteln.

## Patentansprüche

1. Kommunikations-Endgerät insbesondere Mobilfunk-Endgerät (10a, 10b) umfassend:
- Informationseingabemittel (16a, 16b, 26a, 26b, 28a, 28b) zum Eingaben von Informationen,
- eine Sende-/Empfangseinheit zum Senden und Empfangen von Informationen und
- eine visuelle Anzeigeeinheit (18a, 18b), insbesondere ein Display, zum visuellen Ausgeben von Informationen,
**dadurch gekennzeichnet,**
**dass** die visuelle Anzeigeeinheit (18a, 18b) oder/und die Informationseingabemittel (16a, 16b) jeweils in wenigstens zwei unterschiedlichen Betriebsmodi betreibbar sind, wobei jedem Betriebsmodus ein vorbestimmter Informationsgehalt zuordenbar oder zugeordnet ist.

2. Kommunikations-Endgerät (10a, 10b) nach Anspruch 1,
**dadurch gekennzeichnet,**
**dass** die visuelle Anzeigeeinheit (18a, 18b) oder/und die Informationseingabemittel (16a, 16b) beleuchtbar sind, wobei die unterschiedlichen Betriebsmodi auf Variation der Beleuchtung der visuellen Anzeigeeinheit (18a, 18b) oder/und der Informationseingabemittel (16a, 16b) beruhen.

3. Kommunikations-Endgerät (10a, 10b) nach Anspruch 2,
**dadurch gekennzeichnet,**
**dass** die visuelle Anzeigeeinheit (18a, 18b) oder/und die Informationseingabemittel (16a, 16b) mit wenigstens zwei verschiedenen Farben beleuchtbar sind.

4. Kommunikations-Endgerät (10a, 10b) nach Anspruch 2 oder 3,
**dadurch gekennzeichnet,**
**dass** die visuelle Anzeigeeinheit (18a, 18b) oder/und die Informationseingabemittel (16a, 16b) mit wenigstens zwei verschiedenen Beleuchtungsintensitäten beleuchtbar sind.

5. Kommunikations-Endgerät (10a, 10b) nach einem der Ansprüche 2 bis 4,
**dadurch gekennzeichnet,**
**dass** die visuelle Anzeigeeinheit (18a, 18b) oder/und die Informationseingabemittel (16a, 16b) alternierend, vorzugsweise regelmäßig alternierend, in unterschiedlichen Betriebsmodi betreibbar sind.

6. Kommunikations-Endgerät (10a, 10b) nach einem der vorangehenden Ansprüche,
**dadurch gekennzeichnet,**
**dass** die Informationseingabemittel (16a) eine Tastatur umfassen zur Eingabe von Informationen.

7. Kommunikations-Endgerät (10a, 10b) nach einem der vorangehenden Ansprüche,
**dadurch gekennzeichnet,**
**dass** die Informationseingabemittel einen Temperatursensor (26a, 26b) umfassen zur Erfassung der Aussentemperatur des Kommunikations-Endgerätes (10a, 10b).

8. Kommunikations-Endgerät (10a, 10b) nach einem der vorangehenden Ansprüche,
**dadurch gekennzeichnet,**
**dass** die Informationseingabemittel einen Widerstandssensor (28a, 28b) umfassen zur Erfassung des Hautwiderstands einer das Kommunikations-Endgerät (10a, 10b) berührenden Hand (30) eines Benutzers.

9. Verfahren zum Übermitteln und Anzeigen von Informationen mittels eines ersten Kommunikations-Endgerätes (10a) zu einem zweiten Kommunikations-Endgerät (10b) nach einem der vorangehenden Ansprüche, wobei über die Informationseingabemittel (16a, 26a, 28a) des ersten Kommunikations-Endgerätes (10a) Informationen eingegeben werden, welche nach Übertragung zu dem zweiten Kommunikations-Endgerät (10b) den Betriebsmodus der visuellen Anzeigeeinheit (18b) oder/und der Informationseingabemittel (16b) bestimmen.

10. Verfahren nach Anspruch 9,
**dadurch gekennzeichnet,**
**dass** die visuelle Anzeigeeinheit (18b) oder/und die Informationseingabemittel (16b) des zweiten Kommunikations-Endgerätes (10b) nach Maßgabe des Informationsgehaltes der übertragenen Daten in Intensität oder/und Farbe unterschiedlich beleuchtet werden.

11. Verfahren nach Anspruch 9 oder 10,
**dadurch gekennzeichnet,**
**dass** die Informationseingabemittel eine Tastatur (16a, 16b) umfassen zur Eingabe von Informationen, wobei der Informationsgehalt der eingegebenen Informationen den Betriebsmodus der visuellen Anzeigeeinheit (18b) oder/und der Informationseingabemittel (16b) des zweiten Kommunikations-Endgerätes bestimmt.

12. Verfahren nach einem der Ansprüche 9 bis 11,
**dadurch gekennzeichnet,**
**dass** die Informationseingabemittel einen Temperatursensor (26a, 26b) umfassen zur Erfassung der Aussentemperatur, wobei der Informationsgehalt der zwischen dem ersten und dem zweiten Kommunikations-Endgerät (10a, 10b) übertragenen Informationen nach Maßgabe der erfassten Temperatur bestimmt wird.

13. Verfahren nach einem der Ansprüche 9 bis 12,
**dadurch gekennzeichnet,**
**dass** die Informationseingabemittel einen Widerstandssensor (28a, 28b) umfassen zur Erfassung des Hautwiderstands einer das Kommunikations-Endgerät (10a) berührenden Hand (30) eines Benutzers, wobei der Informationsgehalt der zwischen dem ersten und dem zweiten Kommunikations-Endgerät (10a, 10b) übertragenen Informationen nach Maßgabe des erfassten Hautwiderstandes bestimmt wird.
